## Europäisches Patentamt
## European Patent Office
## Office européen des brevets

(19)

(11) Numéro de publication: **0 099 294**
**B1**

(12) # FASCICULE DE BREVET EUROPÉEN

(45) Date de publication du fascicule du brevet:
**10.06.87**

(51) Int. Cl.⁴: **B 64 C 27/32**

(21) Numéro de dépôt: **83401401.1**

(22) Date de dépôt: **07.07.83**

(54) Plateau de moyeu, procédé de fabrication et moyeu de rotor de giravion équipé de tels plateaux.

(30) Priorité: **08.07.82 FR 8211988**

(43) Date de publication de la demande:
**25.01.84 Bulletin 84/4**

(45) Mention de la délivrance du brevet:
**10.06.87 Bulletin 87/24**

(84) Etats contractants désignés:
**DE GB IT**

(56) Documents cité:
**DE-A-2 745 468**
**FR-A-2 156 182**
**FR-A-2 369 158**
**FR-A-2 392 875**
**FR-A-2 454 963**

(73) Titulaire: **AEROSPATIALE Société Nationale Industrielle, 37 boulevard de Montmorency, F-75781 Paris Cédex 16 (FR)**

(72) Inventeur: **Mouille, René Louis, Villa La Pinède Le Coton Rouge, F-13100 Aix- en- Provence (FR)**
Inventeur: **Leman, Jean- Luc Michel, "Le Bel Ormeau" Bâtiment C3 avenue Jean- Paul Coste, F-13100 Aix- en- Provence (FR)**

(74) Mandataire: **Lepeudry- Gautherat, Thérèse, Armengaud Jeune Cabinet Lepeudry 23 boulevard de Strasbourg, F-75010 Paris (FR)**

EP 0 099 294 B1

## Description

La présente invention a pour objet un plateau destiné plus particulièrement à l'équipement d'un moyeu de rotor de giravion, un procédé de fabrication d'un tel plateau, ainsi qu'un moyeu de rotor de giravion équipé d'au moins un plateau de ce type.

Le plateau selon l'invention, destiné à être solidarisé à la partie supérieure d'un mât rotor, perpendiculairement à l'axe de rotation de ce dernier, afin de relier les pales du rotor au mât rotor, est réalisé en matériau composite et comprend un flasque stratifié constitué par un empilement de couches de tissu de fibres à haute résistance mécanique.

Un moyeu de rotor de giravion, comprenant deux plateaux de ce type, est décrit dans le brevet français n° 2 392 875 dans lequel un moyen selon le préambule de la revendication 1 est présenté. Dans ce brevet, la partie centrale de la tête du rotor, ou moyeu, est un corps intégral en matériau composite fibreux, réalisé par la réunion des deux plaques ou plateaux sensiblement superposables comportant une pièce intermédiaire coaxiale. Les plateaux ont une forme en étoile et sont disposés coaxialement avec interposition d'une pièce d'écartement monobloc ou divisée en éléments placés dans les zones de transition entre les bras des plateaux en étoile. Le moyeu intégral en un matériau composite fibreux est constitué par exemple de fibres de verre noyées dans une résine synthétique, de sorte que les fibres s'étendent en continu d'une pointed'une branche d'un plateau à la pointe de la branche diamétralement opposée, car le moyeu décrit dans ce brevet est destiné à équiper un rotor comprenant un nombre pair de pales. Les trois pièces constitutives du moyeu que sont les deux plateaux et la pièce intermédiaire coaxiale peuvent être fabriquées par un procédé de stratification manuelle de plusieurs couches ou mats de tissu de fibres, et assemblées non encore complètement durcies, c'est-à-dire à l'état prédurci, puis être complètement durcies en commun sous pression. Pour la fabrication du moyeu, ce brevet propose toutefois d'envisager également d'autres procédés, tels que la technique de bobinage de stratififs sous tension ou un procédé d'enroulement mécanique, grâce auxquels le moyeu peut être fabriqué en une seule opération.

Selon le certificat d'addition n° 2 454 963 au brevet français précité, lorsque les plateaux plats d'un tel moyeu sont réalisés de façon usuelle, par un procédé de stratification des couches de tissu de fibres de verre, imprégnées d'une résine synthées en forme d'étoile, il se pose un problème de résistance, et la structure stratifiée en tissu impose des limitations à l'utilisation du moyeu, que ne peut être employé que pour équiper des rotors à faibles vitesses de rotation nominales.

Afin de remédier à cet inconvénient majeur, le certificat d'addition précité un moyeu, dont chacun des deux plateaux se compose d'un nombre de couches correnspondant à celui des paires de pales du rotor, chaque couche étant constituée d'au moins une boucle de fibres s'étendant en continu entre une paire de pales du rotor, c'est-à-dire de l'extrémité radiale externe d'une branche de l'étoile à l'extrémité radiale externe de la branche diamétralement opposée et, par paire de pales du rotor, d'au moins deux sections de boucles de fibres se succédant entre une ou les autres paires de pales, et séparées par la première boucle, la boucle de fibres de chaque couche étant disposée au-dessus et/ou au-dessous d'une paire de sections de boucles de fibres, orientées dans le même sens, d'une couche inférieure et/ou supérieure, avec interposition entre deux couches successives d'une couche intermédiaire présentant une orientation croisée des fibres et distinée à la réunion des boucles de fibres et des sections de boucles de fibres.

Pour chaque couche comprenant au moins une boucle de fibres sans fin, on dispose, dans le sens de la longueur d'une paire de pales diamétralement opposées, autant de boucles de fibres sans fin, passant au centre de la couche, et disposées côte à côte, qu'il y a d'alésages de raccordement dans chacune des extrémités radiales externes des branches diamétralement opposées correspondantes du plateau en forme d'étoile, et on dispose également dans le sens de la longueur de chacune des autres paires de pales diamétralement opposées un nombre de paires de sections de boucles de fibres (disposées pour chaque paire de part et d'autre des boucles de fibres continues dans la partie centrale de la couche) égal au nombre des alésages de raccordement. Les couches intermédiaires et d'éventuelles couches de recouvrement de l'empilement sont réalisées en un stratifié de tissu, ainsi que les parties de chaque couche qui sont entourées soit par les boucles soit par les sections de boucles de fibres et les pièces de remplissage, dont certaines sont chacune disposées entre la partie d'une boucle de fibres s'étendant dans une branche de l'étoile et la section de boucle de fibres adjacente d'une branche adjacente de l'étoile, et dont d'autres sont disposées entre les sections de boucles et les boucles ou entre les extrémités radiales externes des boucles et l'extrémité radiale externe de la branche correspondante.

Chaque plateau n'est donc pas homogène, puisque de nombreuses couches de l'empilement sont constituées par l'association de boucles et de sections de boucles de fibres, orientées de sorte qu'elles sont particulièrement bien adaptées pour l'absorption et la transmission de la force centrifuge des pales, et de pièces de remplissage, disposées à l'intérieur et à l'extérieur des boucles et sections de boucles, et qui contribuent essentiellement à la résistance à la flexion du plateau.

On sait qu'un plateau de moyeu doit remplir essentiellement trois fonctions:

- reprendre la force centrifuge,
- transmettre au mât rotor les efforts tranchants dus aux effets de la portance sur les pales et aux différents moments résultant des muvements des pales,
- transmettre le couple moteur du mât rotor aux pales.

Si l'on souhaite que les boucles et sections de boucles de fibres jouent convenablement leur rôle en reprenant l'essentiel de la force centrifuge, et que les pièces de remplissage jouent leur fonction de transmission partielle du couple moteur et de l'essentiel des efforts tranchants, il apparaît nécessaire:
- de raidir les boucles et sections de boucles dans le sens de la force centrifuge, ce qui peut être obtenu en augmentant leur section,
- d'assouplir les couches de tissu des pièces de remplissage dans la direction d'action de la force centrifuge et de les raidir en battement ce qui peut être obtenu en disposant les couches de tissu avec des orientations différentes.

Mais on constate alors que l'association, au sein de mêmes couches, d'éléments solidarisés les uns aux autres et devant satisfaire à des exigences contradictoires, en résistant à des sollicitations différentes, a pour conséquence qu'un délaminage se produit à l'interface tissus-boucles et sections de boucles de fibres.

La présente invention a pour objet de réaliser un plateau de rotor du type défini ci-dessus, qui ne présente pas les inconvénients précités et puisse être soumis à de fortes sollicitations, ce plateau devant convenir à l'équipement de rotors principaux d'hélicoptères rapides dont le rotor est sollicité par des efforts et des moments de flexion et de torsion à des niveaux élevés, et pouvoir être fabriqué sans difficulté tout en étant d'un poids et d'un coût réduits, sans diminution de sa fiabilité.

A cet effet, le plateau selon l'invention se caractérise en ce que le flasque stratifié, constitué par un empilement de couches de tissu de fibres à haute résistance mécanique, comprend une ossature constituée de couches longitudinales de tissus, c'est-à-dire telles que la trame ou la chaîne du tissu est orientée radialement, dans la direction d'action de la force centrifuge, qui sont disposées à coeur de l'empilement et, au moins dans la portion périphérique du flasque, en surface de l'empilement, et que le flasque stratifié est entouré d'une ceinture de stratifils de fibres à haute résistance mécanique.

Les fibres à haute résistance mécanique utilisées pour la constitution des tissus et de la ceinture de stratifils peuvent être respectivement des fibres du matériau commercialisé sous le nom de marque de Kevlar et des fibres de verre, mais de préférence on choisit un matériau présentant un rapport élevé de la limite de fatigue à la densité, tel que le carbone, à la fois pour le tissu et la ceinture de stratifils. A titre indicatif, ce rapport, qui est de 6, 4 pour l'acier, 4, 5 pour du dural, 7, 8 pour le titane, est de 14, 6 pour le carbone en tissu, qui présente de plus, dans une structure stratifiée, une faible vulnérabilité. (Très bon caractère "fail-safe").

Comme cela est le cas dans le certificat d'addition précité, un plateau selon l'invention n'est donc pas un ensemble homogène, mais il comporte deux éléments, dont l'un, en position centrale, est un flasque uniquement constitué par un empilement de couches de tissu de fibres, et est plus particulièrement destiné à la transmission d'une part du couple moteur et d'autre part des efforts tranchants dus aux moments résultants des mouvements des pales et à la portance, et dont l'autre élément, uniquement constitué de stratifils de fibres, ceinture le flasque central, et est plus particulièrement destiné à la reprise des efforts centrifuges qui s'équilibrent essentiellement dans cette ceinture sans passer dans une mesure trop importante par le flasque central du plateau.

Cependant, dans un plateau selon l'invention, qui peut se présenter sous la forme d'une plaque d'épaisseur constante, les efforts centrifuges amenés par la rotation des pales se répartissent entre les deux éléments constitutifs du plateau suivant leur raideur respective dans le sens radial, de telle sorte qu'une proportion importante de la force centrifuge soit encaissée par la ceinture de stratifils et qu'une part non négligeable passe par le flasque dans l'empilement des tissus.

L'invention permet d'améliorer la répartition de l'effort centrifuge entre l'empilement de tissus et la ceinture de stratifils, d'une part en raidissant la ceinture de stratifils dans le sens de l'action de la force centrifuge, ce qui est obtenu en donnant à la ceinture une section suffisamment importante, et d'autre part en assouplissant les couches de tissus dans le sens d'action de la force centrifuge et en les raidissant en battement, ce qui est obtenu en donnant au flasque stratifié une épaisseur variable qui est maximale dans la partie centrale et en donnant des orientations différentes aux couches de tissus du flasque.

Avantageusement, les tissus de fibres utilisés sont des satins, dont les caractéristiques suivant la trame et la chaîne sont identiques.

Afin d'assouplir le flasque en traction, des couches croisées, c'est-à-dire telles que la trame ou la chaîne est orientée d'un certain angle sur la direction d'action de la force centrifuge, sont disposées à coeur de l'empilement et, éventuellement, en surface dans la portion centrale du flasque, sur une face plane de ce dernier.

Avantageusement, certaines des couches croisées, lesquelles sont toutes moins résistantes et plus souples que les couches longitudinales vis-à-vis des efforts centrifuges, sont arrêtées progressivement entre la portion centrale et les parties en saillie radiale vers l'extérieur de la portion périphérique du flasque, afin d'obtenir la variation d'épaisseur souhaitée de l'empilement.

Dans une première forme de réalisation avantageuse, le flasque, qui présente une portion centrale à face plane et une portion périphérique à face plane, laquelle comprend des parties en saillie radiale vers l'extérieur en nombre égal au nombre des pales que le plateau est destiné à relier au mât rotor, chacune des parties en saillie radiale vers l'extérieur étant percée d'au moins un alésage de raccordement à une pale correspondante, est tel que la ceinture de stratifils est serrée contre la tranche radiale externe de chacune des parties en saillie radiale vers l'extérieur, afin que la ceinture joue correctement son rôle en encaissant l'essentiel de la force centrifuge.

Avantageusement, le flasque peut présenter une forme en étoile, dont chaque branche constitue une partie en saillie radiale vers l'extérieur, plus large du côté de la portion centrale du flasque qu'à son extrémité radiale externe, et selon l'invention les volumes délimités entre deux branches adjacentes, la ceinture de stratifils et de revêtements superficiels, dont chacun est constitué d'au moins une couche de l'empilement, sont occupés par un matériau de remplissage tel qu'une mousse à cellules fermées, de sorte que les zones non travaillantes correspondent à des allégements dans l'empilement des couches de tissu de fibres.

Mais le flasque peut, selon l'invention, présenter également une autre forme, par exemple polygonale à côtés légèrement arrondis ou bombés radialement vers l'extérieur, et dont les sommets arrondis constituent les parties en saillie radiale vers l'extérieur.

Le plateau selon l'invention présente, par rapport aux réalisations selon l'état de la technique, et particulièrement celles utilisant des matériaux métalliques, l'avantage d'une grande légèreté, d'une grande résistance à l'effet d'entaille, d'un faible coût de fabrication, d'un entretien aisé, puisqu'aucune intervention de maintenance n'est nécessaire et enfin d'un encombrement réduit, ce qui diminue la traînée d'un moyeu équipé de tels plateaux.

La ceinture de stratifils, qui est logée au niveau des parties en saillie radiale vers l'extérieur, dans des alvéoles ménagés dans la tranche en bout de ces parties et ouverts vers l'extérieur, est avantageusement constituée d'un ruban de stratifils préimprégnés d'une résine synthétique, qui est enrubanné autour du flasque puis polymérisé, mais il est également possible que la ceinture de stratifils soit constituée d'un agglomérat de stratifils préimprégnés d'une résine synthétique, qui ont été bobinés autour du flasque puis polymérisés.

L'utilisation, dans les rotors d'hélicoptères, de ceintures, sangles ou de bandages constitués de fibres unidirectionnelles, par exemple en verre, agglomérées et noyées dans une matière plastique, afin d'absorber, dans certaines conditions, les forces centrifuges qui sollicitent certains composants de ces rotors, a déjà été proposée notamment dans les brevets français 2 156 182 et 2 369 158.

Le brevet français 2 156 182, concerne un moyeu à corps central de liaison dont sont solidaires des manchons supports de pales, qui sont des manchons radiaux en nombre égal au nombre de pales du rotor, et dans chacun desquels un pied de pale est reçu et se trouve relié au corps central de liaison par un paquet de pièces de traction élastique en torsion. Ce paquet, qui peut être une branche d'un paquet en étoile, s'étend dans un plan qui est sensiblement le plan de rotation du rotor. Dans ce brevet, on retrouve deux types différents de bandages destinés à assurer l'absorption des efforts centrifuges en cas de fissuration d'organes sollicités et afin d'assurer la survie de l'hélicoptère : un premier type de bandage est disposé autour du corps central de liaison et se trouve fixé par un axe sur un manchon de pied de pale et non sur le pied de pale directement. Par ailleurs, un second type de bandage est disposé autour de chaque axe de liaison du pied de pale au manchon correspondant. Ces bandages ne sont donc pas du tout disposés dans la même position que les ceintures de stratifils de l'invention et constituent des composants d'un moyeu de structure très différente de celle du moyeu faisant l'objet de la présente demande. En effet le moyeu de ce brevet FR 2 156 182 n'est pas un moyeu à deux plateaux et on ne retrouve pas, par ailleurs, de plateau reliant le pied de pale au moyeu et constitué d'un flasque stratifié réalisé par empilement de couches de tissus de fibres imprégnées de résines. Si le moyeu de ce brevet français 2 156 182 comprend bien un élément avant sensiblement la même forme qu'un plateau selon l'invention, cet élément n'est pas un plateau se fixant sur un corps central de moyeu relié au mât rotor, mais un corps central de liaison, et si cet élément, qui ne peut être que métallique, présente bien au moins un alésage de raccordement destiné au passage d'un axe, il s'agit d'assurer le raccordement non pas au pied d'une pale mais à l'extrémité radiale interne du paquet de pièces flexibles en torsion.

Le brevet français 2 369 158 concerne bien un moyeu comprenant des plaques supérieure et inférieure, mais le pied de chaque pale est solidaire d'un longeron porteur monté en rotation dans des paliers radiaux interne et externe montés entre les deux plaques, chaque longeron étant constitué comme une poutre résistant à la flexion et réalisée en un matériau composite fibreux, cette poutre comprenant des secteurs ou tronçons renforcés de sangles constituées de deux boudins de fibres unidirectionnelles en direction longitudinale, en forme de boucle dont les deux branches sont séparées par un panneau de cisaillement en tissu de fibres croisées à 45°. Le palier interne présente une pièce ajustée qui transmet par un élément de palier les forces transversales et centrifuges à une pièce en forme fixée entre les plaques supérieure et inférieure, et la compensation des forces centrifuges est assurée par des éléments en boucle et qui relient entre elles toutes les pièces en forme et exercent ainsi une compensation directe des forces centrifuges de toutes les pales du rotor sans que le moyeu soit sollicité par celles-ci. Les éléments en boucle, sollicités uniquement en traction, sont réalisés en matériau composite fibreux par le procédé d'enroulement de fil et se composent chacun, comme on le voit sur la figure 3, de deux boudins de fibres de modules d'élasticité fortement différents mais de rigidité à peu prés égale, par exemple un boudin intérieur en matière plastique de fibres de verre et un boudin extérieur en matière plastigue de fibres de carbone. Les deux boudins en boucles sont ainsi calculés que chaque part prenne en charge à elle seule la pleine force centrifuge.

Dans cette réalisation, dans laquelle des caissons sont disposés pour chaque pale entre les plaques supérieure et inférieire, les boucles de compensation des efforts centrifuges ne sont pas portées à la péripdérie des plaques supérieure et inférieure, mais autour des pièces en forme, au centre du moyeu.

En conclusion, non seulement l'architecture générale des moyeux décrits dans les brevets français 2 156 182 et 2 169 158 est très différente de celle de l'invention, mais également la position des ceintures ou bandaqes de reprise, des efforts centrifuges, qui ne coopèrent pas avec la structure des plateaux supérieur et inférieur et ne participent pas à la transmission des efforts et des moments entre les pales et le moyeu.

L'invention a également pour objet un procédé de fabrication d'une plateau, consistant:

- à disposer dans un moule un empilement de couches de tissus de fibres à haute résistance mécanique, après imprégnation du dissu avec une résine synthétique et découpe de chaque couche à la forme requise,

- à effectuer une compression appropriée de l'empilement, en fonction des caractéristiques et qualités souhaitées du plateau,

- à effectuer un premier cycle de polymérisation,

- à démouler,

et se caractérise en ce qu'il consiste en outre:

- à bobiner ou à enrubanner respectivement sur la tranche de l'empilement, des stratifils ou un ruban de stratifils de fibres à haute résistance mécanique préimprégnées d'une résine synthétique, jasqu'à réaliser une ceinture de stratifils d'épaisseur requise, après mise en place éventuelle de blocs d'un matériau de remplissage entre des parties en saillie radiale vers l'extérieur de l'empilement,

- et à effectuer un second cycle de polymérisation.

L'invention a enfin pour objet un moyeu de rotor de giravion comprenant au moins un plateau tel que défini ci-dessus.

Dans une première forme de réalisation, le moyeu selon l'invention comprend un plateau inférieur et un plateau supérieur coaxiaux et séparés par une entretoise, et se caractérise en ce que chacun des plateaux présente une forme d'assiette telle que la portion centrale circulaire du flasque se raccorde à la partie périphérique par au moins une portion sensiblement conique, dont la concavité est tournée vers l'autre plateau, chacun des plateaux étant fixé par sa portion centrale à l'entretoise et, pour ce qui concerne le plateau inférieur, à l'extérieur supérieure d'un mât rotor.

Mais avantageusement, le plateau inférieur et le plateau supérieur, séparés par une entretoise, sont des plateaux à épaisseur variable, dont le flasque, en forme d'étoile, est tel qu'une face plane de la portion centrale du flasque se raccorde à la face plane correspondante de la portion périphérique par une surface conique, alors que l'autre face du flasque est plane, et les branches superposées des deux plateaux présentent chacune un unique alésage de raccordement à une pale correspondante, cet alésage étant équipé d'au moins une bague épaulée anti-frottement destinée à recevoir une broche de retenue d'un dispositif de liaison au pied de la pale correspondante.

La présente invention sera mieux comprise à l'aide d'exemples particuliers de réalisation, décrits ci-après à titre non limitatif en référence aux figures annexées dans lesguelles:

la figure 1 est une demi-coupe axiale d'un premier exemple de moyeu de rotor d'hélicoptère, équipé de deux plateaux conformes à une première variante de réalisation;

la figure 2 est une vue en plan avec arrachement partiel de l'un des plateaux du moyeu selon la figure 1;

la figure 3 est une coupe selon la ligne III-III de la figure 2;

la figure 4 est une vue à plus grande échelle d'une partie de la figure 3;

la figure 5 est une vue analogue à la figure 2 d'une seconde variante de réalisation d'un plateau susceptible d'équiper un moyeu selon la figure 1;

la figure 6 est une coupe selon la ligne VI-VI de la figure 5;

les figures 7 et 8 sont des coupes transversales schématiques respectivement selon les lignes VII-VII et VIII-VIII de la figure 6;

la figure 9 est une vue analogue à la figure 1 d'un second exemple de moyeu de rotor d'hélicoptère équipé de deux plateaux selon une troisième variante de réalisation;

la figure 10 est une vue en plan du plateau supérieur du moyeu selon la figure 9; et

la figure 11 est une coupe selon XI-XI de la figure 10.

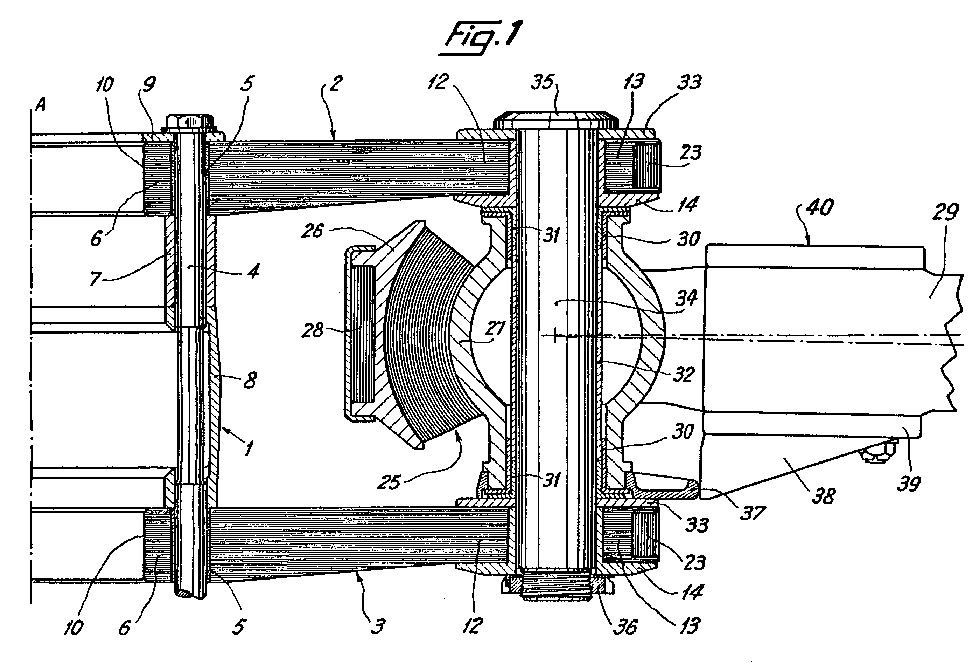

Le moyeu de rotor d'hélicoptère représénté sur la figure 1 comprend essentiellement trois éléments, qui sont une entretoise 1, de forme générale cylindrique, et deux plateaux identiques, dont l'un 2 est, le plateau supérieur et l'autre 3 le plateau inférieur. Les deux plateaux 2 et 3 sont reliés l'un à l'autre par une couronne de boulons 4 dont la tige de chacun traverse une bague 5 métallique d'introduction d'efforts, montée dans un alésage de la portion centrale 6 à faces supérieure et inférieure planes du plateau supérieur 2, un alésage percé dans l'épaisseur de la paroi d'une partie supérieure tubulaire 7 de l'entretoise 1, deux alésages alignés ménagés chacun dans l'un des rebords radiaux internes des extrémités supérieure et inférieure d'une partie inférieure annulaire 8 de l'entretoise 1, et une seconde bague d'introduction d'efforts 5 montée dans un alésage de la portion centrale 6 à faces supérieure et inférieure planes du plateau inférieur 3. La tête du boulon 4 est appliquée contre une couronne d'appui 9, reposant contre la face supérieure de la portion centrale 6 du plateau supérieur 2, et dont l'ouverture centrale vient sensiblement dans le prolongement de l'ouverture centrale 10 ménagée dans la partie centrale 6 des deux plateaux 2 et 3. La couronne d'appui 9 présente seize perçages alignés avec les alésages internes des deux bagues 5 et les alésages des deux parties 7 et 8 de l'entretoise 1, de façon à être également traversés par les tiges des boulons 4, dont les extrémités inférieures filetées (non représentées) traversent des alésages percés dans un rebord radial externe dans l'extrémité supérieure (également non représentée) d'un mât rotor, sur lequel les boulons 4 sont vissés par des écrous de fixation du moyeu sur le mât rotor.

Alors que les parties 7 et 8 de l'entretoise 1 et la couronne 9 sont des éléments métalliques, les deux plateaux 2 et 3 sont en matériau composite. Comme représenté sur les figures 2 à 4, chaque plateau comprend un flasque 11 en forme d'étoile présentant autant de branches 12 que de pales du rotor. Dans cet exemple, le flasque est cruciforme et convient à l'équipement d'un moyeu de rotor quadripale.

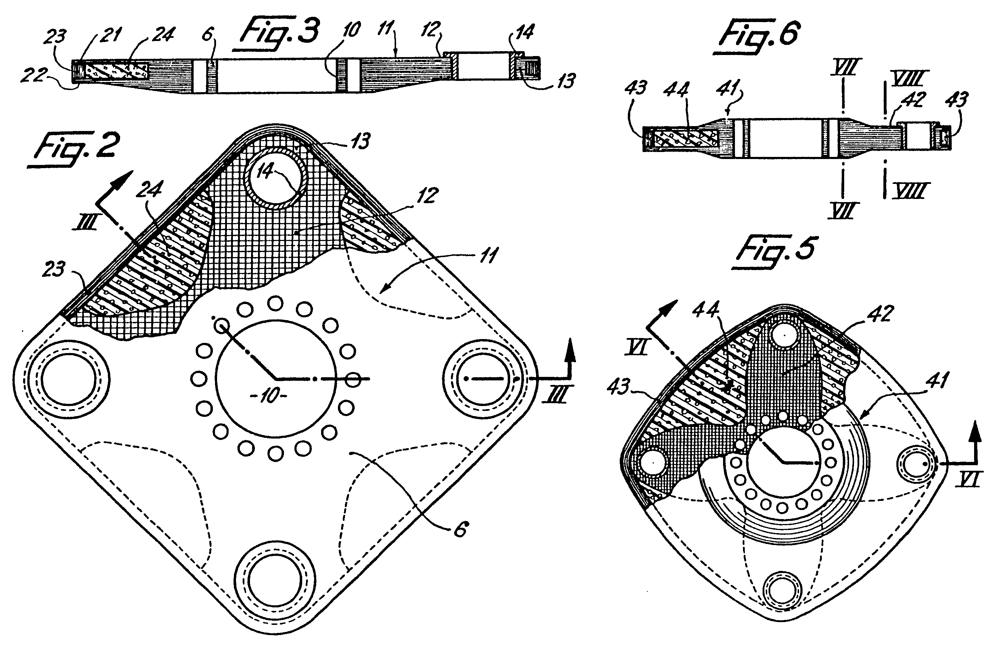

Chaque branche 12 est plus large du côté de la portion centrale 6 du flasque 11 que du côté de son extrémité radiale externe 13, à faces supérieure et inférieure planes, qui est cependant élargie et arrondie, et présente un alésage dans lequel est montée une bague épaulée 14. Comme cela apparaît sur la figure 3, l'épaisseur du flasque 11 est maximale dans sa portion centrale 6, et minimale dans sa portion périphérique comprenant les extrémités radiales externes 13 des branches 12, et la face supérieure du flasque 11 est plane sur toute sa section, tandis que la face inférieure plane de sa portion centrale 6 se raccorde à la face inférieure plane de sa portion périphérique par une surface conique. Le flasque 11 est constitué par un empilement de couches de tissu de fibres de carbone. Le tissu utilisé est un satin, dont les caractéristiques suivant la trame et la chaîne sont identiques. L'ossature du flasque 11 est constituée par des couches longitudinales de tissu, c'est-à-dire des couches dont la trame ou la chaîne du tissu est orientée dans la direction d'action de la force centrifuge, qui correspond à la direction radiale des branches 12 du flasque 11. Comme représenté sur la figure 4, et afin d'optimiser le dimensionnement des flasques 11, des couches longitudinales sont disposées à coeur de l'empilement et en surface. Deux couches longitudinales 15 et 16 s'étendent en surface respectivement sur toute la face inférieure du flasque et sur toute sa face supérieure. A coeur de l'empilement, les couches longitudinales 17, d'épaisseur pouvant varier d'une couche à l'autre, sont disposées en alternance avec des couches croisées ou des groupes de couches croisées 18 et 19, c'est-à-dire des couches dont la trame ou la chaîne du tissu est orientée à 45° environ sur la direction d'action de la force centrifuge.

Les couches longitudinales 15, 16 et 17 ne sont pas interrompues et s'étendent sur toute la section du flasque 11, tandis que certaines couches croisées 19 sont arrêtées progressivement dans la zone de transition, et que d'autres couches croisées 18 s'étendent sur toute la section du flasque 11. La figure 4 représente un exemple d'évolution progressive des concentrations, des dimensions et épaisseurs relatives, et des positions relatives des couches croisées 18 et 19 et longitudinales 15, 16 et 17.

La variation de l'épaisseur de l'empilement du flasque 11, assurée par l'interruption progressive des couches croisées 19, et la disposition de couches de tissu ayant des orientations différentes, permettent d'obtenir un raidissement en battement ainsi qu'un assouplissement longitudinal du flasque 11, dans le sens d'action de la force centrifuge. En effet, l'épaisseur plus importante de l'empilement dans la portion centrale 6, vers laquelle les branches 12 sont planes, qu'à ses extrémités radiales, où les branches 12 sont plus étroites, assure un raidissement du flasque 11 en battement et permet à ce dernier de travailler à faible contrainte. Les couches croisées 18, 19 et 20, moins résistantes et plus souples que les couches longitudinales 15, 16 et 17 vis-à-vis des efforts centrifuges, permettent d'assouplir le flasque 11 en traction. Quelques couches, de forme carrée ou en losange à coins arrondis, des parties supérieure et inférieure de l'empilement se prolongent radialement vers l'extérieur, au-delà des autres couches, de façon à définir un revêtement supérieur 21 et un revêtement inférieur 22, qui délimitent entre eux et avec le reste de l'empilement un alvéole ouvert vers l'extérieur dans la tranche de l'extrémité radiale externe de chaque branche 12 du flasque 11, et une ceinture de stratifils de fibres de carbone 23, qui entoure le flasque 11, est serrée contre la tranche des branches 12 du flasque 11 et reçue dans les alvéoles ainsi délimités. Cette ceinture 23 est constituée par un ruban de stratifils de carbone par exemple ou de stratifils de fibres à haute caractéristique mécanique tels que de verre ou de type kevlar enrubanné autour du flasque en étoile 11. Les volumes délimités entre la ceinture 23, les revêtements supérieur 21 et inférieur 22 et deux branches 12 adjacentes du flasques sont occupés par des blocs 24 d'un matériau de remplissage, qui peut être une mousse à cellules fermées, de sorte que chaque plateau a une forme en plan qui est carrée ou en losange à coins arrondis, comme représenté sur la figure 2.

En se repportant à nouveau à la figure 1, on constate que les plateaux supérieur 2 et inférieur 3 identiques, s'étendant dans des plans sensiblement perpendiculaires à l'axe de rotation A du rotor, sont disposés de sorte que les quatre branches respectives des deux plateaux 2 et 3 soient exactement superposées, et que leur bague épaulée 14, en position renversée par rapport à celle qui est représentée sur la figure 3, soient coaxiales.

Une butée sphérique lamifiée, d'un type connu, jouant simultanément le rôle d'articulation de traînée, de battement et d'incidence, (pour la commande du pas) et dont l'ensemble est désigné par 25, est montée entre les extrémités 23 de chaque paire de branches 12 superposées des deux plateaux 2 et 3. La structure de cette butée sphérique lamifiée 25, et en particulier de ses armatures radiales interne 26 et radiale externe 27, ainsi que la coopération de ses armatures respectivement avec une boucle de stratifils de fibres à haute résistance mécanique 28, faisant partie de l'ossature résistante de la pale 29 correspondante, et avec deux bagues épaulées anti-frottement 30, aux extrémités d'un alésage du manchon central de l'armature 27, deux bagues épaulées anti-friction 31 et une douille 32, formant entretoise entre l'épaulement d'une bague 14 et l'une de deux rondelles d'appui 33, et une broche métallique creuse 34, traversant les bagues 14, les rondelles 33, les bagues 31 et la douille 32, pour retenir l'armature 24 de la butée sphérique lamifiée entre les extrémités des branches 12 superposées des plateaux 2 et 3 et raccorder ces derniers, se trouvent plus précisément décrites dans la demande de brevet français n° 8 122 027 déposée le 25 novembre 1981 au nom de la Demanderesse, et à laquelle on se reportera avantageusement, car l'architecture générale du rotor principal décrit ci-dessus correspond à celle du rotor faisant l'objet de cette demande précitée. On se borne à indiquer que la tête plate 35 de la broche 34 est appliquée contre la rondelle 33 par le serrage sur l'extrémité inférieure filetée de la broche 34, montée immobile en rotation, d'un écrou 36 vissé et freiné par une goupille, et qu'une butée 37 d'un type connu, de préférence escamotable en vol sous l'action de la force centrifuge, est montée au-dessus (ou au-dessous) du plateau inférieur 3 et coopère en position de service avec une portée 38 solidaire de la branche inférieure 39 d'un levier de commande de pas 40, lorsque le rotor est à l'arrêt ou tourne à faible vitesse, afin de limiter le pivotement vers le bas de la pale 29 sous l'effet de son poids propre. En ce qui concerne la structure du dispositif de maintien et de blocage de la boucle de stratifils 28 sur l'armature 26, qui peut comprendre une plaque fixée sur l'armature 26 et maintenant la boucle de stratifils 28 dans un logement de cette dernière, et en ce qui concerne la structure de la pale 29, du levier de commande de pas 40 ainsi que d'une contre-fiche de rappel élastique en traînée (non représentée), montée entre le levier 40 et l'entretoise 1 du moyeu, on se repportera également à la demande de brevet 8 122 027 précitée.

Dans le moyeu qui vient d'être décrit, les efforts appliqués sur chaque plateau 2 et 3, par exemple au niveau de la liaison à la butée sphérique lamifiée, se répartissent entre le flasque 11 formé de couches de tissu et la ceinture de stratifils 23, suivant le rapport des raideurs axiales pour les forces centrifuges et suivant les raideurs de flexion pour ces efforts de battement. La reprise du couple et le passage des moments sont essentiellement assurés par les flasques 11 des deux plateaux 2 et 3, une partie du couple passant par les contre-fiches de rappel en taînée.

Les efforts centrifuges sont repris, dans leur plus grande partie, par les ceintures 23 et s'équilibrent dans ces dernières sans repasser par les flasques 11.

Les figures 5 à 8 représentent une variante de réalisation des plateaux 2 et 3, dans laquelle on retrouve des composants analogues, réalisés de la même manière avec les mêms constituants, mais dont seule la forme est changée. Le flasque 41 a également une forme d'étoile à quatre branches 42, mais les branches 42 sont arrondies. De même, la forme en plan du plateau, avec sa ceinture de stratifils 43 et ses blocs de matériau de remplissage 44, est celle d'un carré ou d'un losage à coins arrondis et à côtés légèrement arrondis ou bombés vers l'extérieur, comme cela apparaît sur la figure 5. La figure 6 fait apparaître que l'épaisseur de l'empilement des couches de tissu de carbone du flasque 41 est maximale dans la portion centrale à faces supérieure et inférieure planes, et minimale dans la portion périphérique également à faces supérieure et inférieure planes et comprenant les extrémités radiales des branches 42. Mais dans cette réalisation, les faces planes supérieures et les faces planes inférieures des portions centrale et périphérique se raccordent par deux surfaces coniques tournées l'une vers l'autre par leur plus grande base.

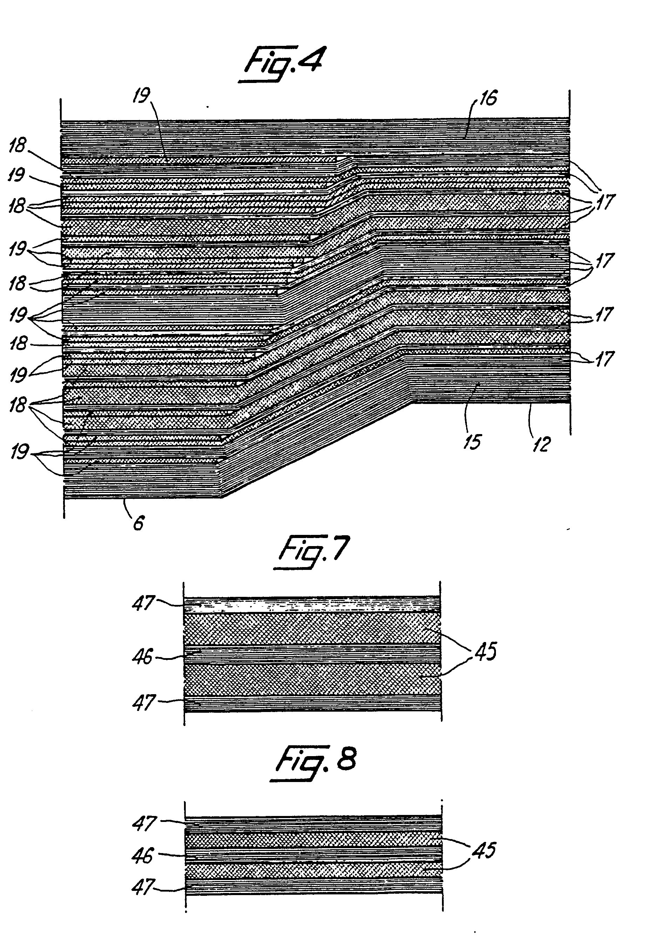

Sur les figures 7 et 8, on constate que l'empilement est constitué de deux ensembles de couches croisées 45, pris chacun en sandwich entre un ensemble central de couches longitudinales 46 et l'un de deux ensembles 47 de couches longitudinales aux parties supérieure et inférieure de l'empilement, dont la variation d'épaisseur est obtenue par la variation d'épaisseur des ensembles de couches croisées 45.

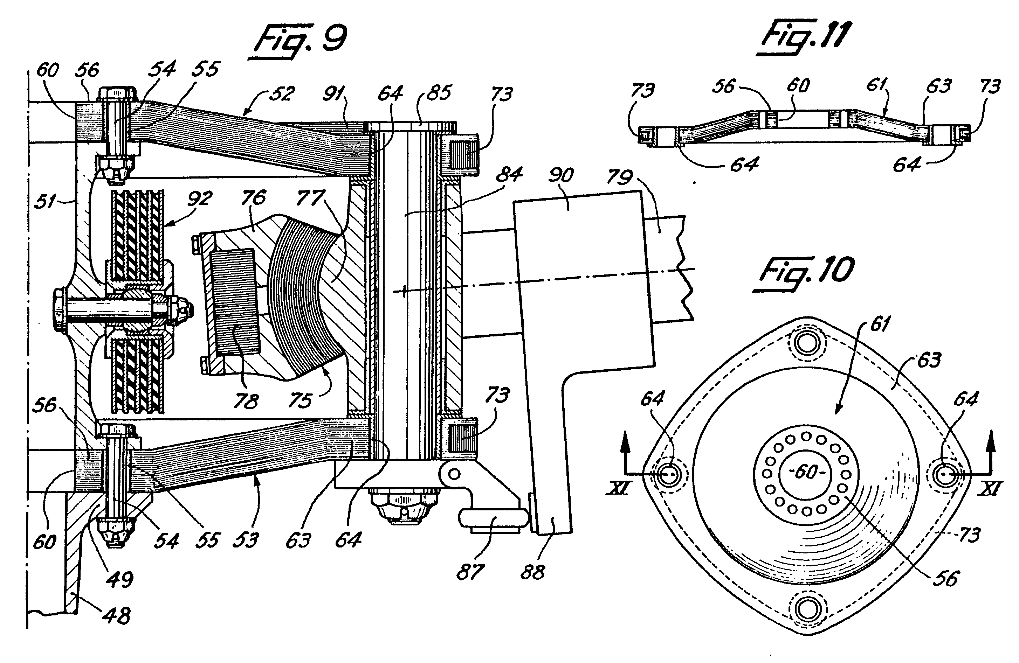

Le second exemple de moyeu, représenté sur la figure 9, est très analogue à celui de la figure 1 et correspond également à celui faisant l'objet de la demande de brevet n° 8 122 027 déjà citée. Il comprend une entretoise tubulaire monobloc 51 solidarisée par des couronnes d'ensembles vis-écrou 54 d'une part au plateau supérieur 52, d'autre part au plateau inférieur 53 et simultanément à l'extrémité supérieure 49 du mât rotor 48, grâce aux alésages équipés de bagues de répartition d'efforts 55 ménagés autour de l'ouverture centrale 60 de la portion centrale 56 circulaire et à faces supérieure et inférieure planes des deux plateaux 52 et 53.

Chacun de ces derniers a la forme d'une assiette creuse de section en carré ou en losange à côtés légèrement arrondis ou bombés vers l'extérieur et à coins arrondis, et comprend un flasque 61 ayant cette même forme et entouré d'une ceinture de stratifils de carbone 73, reçue dans les alvéoles ouverts vers l'extérieur et délimités dans la tranche du flasque 61, dont les coins arrondis sont des parties en saillie radiale vers l'extérieur de la portion périphérique 63 du flasque 61, et dans chacun desquels est ménagé un alésage équipé d'une bague épaulée 64 recevant l'unique broche creuse 84 de liaison des plateaux supérieur 52 et inférieur 53 à l'armature radiale externe 77 de la butée sphérique lamifiée 75 montée dans la boucle de stratifils 78 de l'ossature de la pale 79.

Chaque flasque 61 est constitué par un empilement d'épaisseur sensiblement constante de couches longitudinales et croisées de satin de fibres de carbone, les portions centrale 56 et périphérique 63 de l'empilement se raccordant par une portion de transition tronconique. Sur le moyeu, les plateaux 62 et 63 en forme d'assiette creuse sont montés de sorte que la concavité de l'un soit tournée vers l'autre. On ne décrit pas à nouveau les éléments tels que la butée basse escamotable 87 coopérant avec la portée 88 du levier de commande de pas 90,le montage de la broche 84 ni le dispositif de blocage de la boucle de stratifils 78 dans l'armature radiale interne 76 de la butée sphérique lamifiée 75. Mais on note que sur le plateau supérieur 52, on peut disposer une butée 91, constituée de quelques morceaux de tissu empilés, coopérant avec un méplat usiné sur la tête plate élargie 55 de la broche 84, pour empêcher la rotation de cette dernière. De plus, on a schématiquement représenté une contre-fiche de rappel en traînée 92, telle que décrite dans la demande 8 122 027, et fixée à son extrémité radiale interne sur la partie médiane de l'entretoise 51 par une rotule et un système vis-écrou.

Dans cette réalisation, on peut envisager l'utilisation de tissu de Kevlar au lieu de tissu de carbone, car le Kevlar possède de bonnes caractéristiques mécaniques (faible densité, bonne résistance à l'impact, bon comportement à la traction) mais en raison de sa mauvaise tenue en compression, il est préférable d'utiliser des tissus de carbone pour la réalisation des flasques des plateaux qui travaillent en flexion.

De même, on peut envisager de réaliser la ceinture 73 en stratifils de verre, mais le carbone est préféré pour réaliser un élément devant présenter une bonne raideur longitudinale, afin de reprendre l'essentiel des efforts centrifuges, car l'emploi du verre n'est intéressant que si l'on recherche un rapport peu élevé du module d'élasticité à la limite de fatigue, pour la réalisation de pièces devant subir des déformations importantes.

En ce qui concerne la fabrication des plateaux, un procédé simple et commode consiste successivement:

- à disposer dans un moule un empilement de couches de tissu de fibres à haute résistance mécanique et de préférence en carbone, après imprégnation du tissu avec une résine synthétique et découpe de chacune des couches à la forme requise,

- à effectuer une compression appropriée de l'empilement, en fonction des caractéristiques et qualités souhaitées du flasque du plateau,

- à effectuer un premier cycle de polymérisation, afin de rigidifier l'empilement ainsi réalisé,

- à démouler cet empilement,

- puis a bobiner ou à enrubanner respectivement sur la tranche de l'empilement, des stratifils ou un ruban de stratifils de fibres à haute résistance mécanique, de préférence en carbone, imprégnées d'une résine synthétique, jusqu'à réaliser une ceinture de stratifils d'épaisseur requise, après mise en place éventuelle de blocs d'un matériau de remplissage entre des parties en saillie radiale vers l'extérieur de l'empilement,

- et à effectuer un second cycle de polymérisation, afin de solidariser la ceinture de stratifils autour de l'empilement du flasque.

Il est à noter que par le terme de stratifils on entend dans le présent mémoire un ensemble de fils de base, de filaments ou fibres à haute résistance mécanique enduits et agglomérés parallèlement en un faisceau ou un ruban par une résine synthétique qui est ultérieurement durcie.

Bien que les exemples de moyeu décrits en référence aux figures annexées portent sur des moyeux à deux plateaux, l'invention concerne également des moyeux ne comportant qu'un seul plateau réalisé conformément à l'invention.

## Revendications

1. Plateau destiné plus particulièrement à l'équipement d'un moyeu de rotor de giravion, et à être solidarisé à la partie supérieure d'un mât rotor (48), perpendiculairement à un axe de rotation A de ce dernier, afin de relier des pales (29, 79) de rotor au mât rotor (48), le plateau étant réalisé en matériau composite et comprenant un flasque, stratifié (11, 41, 61) constitué par un empilement de couches de tissu de fibres à haute résistance mécanique, caractérisé en ce que l'ossature du flasque (11) est constituée de couches longitudinales de tissu (15, 17) dont la trame ou la chaîne du tissu est orientée en direction radiale, qui correspond à la direction de la force centrifuge s'exerçant sur le plateau en service, les couches longitudinales étant disposées à coeur de l'empilement (en 17) et, au moins dans la portion périphérique du flasque (11), en surface de l'empilement (en 15 et 16) et que le flasque (11, 41, 61) est entouré d'une ceinture (23, 43, 73) de stratifils de fibres à haute résistance mécanique.

2. Plateau selon la revendication 1, caractérisé en ce que le flasque (11, 41, 61) présente une portion centrale (6, 56) à faces planes et une portion périphérique (63) à faces planes comprenant des parties (13) en saillie radiale vers l'extérieur en nombre égal au nombre des pales (29, 79) que le plateau est destiné à relier au mât rotor (48), chacune desdites parties en saillie radiale vers l'extérieur étant percée d'au moins un alésage de raccordement à une pale correspondante, la ceinture (23, 43, 73) de stratifils étant serrée contre la tranche radiale externe de chacune des parties en saillie radiale vers l'extérieur.

3. Plateau selon la revendication 2, caractérisé en ce que le flasque (11, 41) présente une forme en étoile, chaque branche (12, 42) de l'étoile constituant une partie en saillie radiale vers l'extérieur plus large du côté de la portion centrale (6) du flasque (11, 41) qu'à son extrémité radiale externe (13), les volumes délimités entre deux branches (12, 42) adjacentes, la ceinture (23, 43) de stratifils et deux revêtements superficiels (21, 22) dont chacun est constitué d'au moins une couche de l'empilement, étant occupés par un matériau de remplissage (24, 44) tel qu'une mousse à cellules fermées.

4. Plateau selon la revendication 2, caractérisé en ce que le flasque (61) présente une forme polygonale à côtés légèrement arrondis ou bombés radialement vers l'extérieur, et dont les sommets arrondis constituent les parties en saillie radiale vers l'extérieur.

5. Plateau selon la revendication 4, caractérisé en ce que le flasque (61) présente une forme d'assiette telle que la portion centrale circulaire (56) du flasque (61) se raccorde à la portion périphérique (63) par au moins une portion sensiblement conique.

6. Plateau selon l'une des revendications 1 à 5, caractérisé en ce que l'épaisseur du flasque (11) est sensiblement constante et supérieure à la hauteur de la ceinture (73) de stratifils.

7. Plateau selon l'une des revendications 1 à 5, caractérisé en ce que le flasque (11, 41) présente une épaisseur variable, qui est maximale dans la portion centrale (6).

8. Plateau selon la revendication 7, caractérisé en ce qu'une face plane de la portion centrale (6) du flasque (11) se raccorde à la face plane correspondante de la portion périphérique par une surface conique alors que l'autre face du flasque (11) est plane.

9. Plateau selon la revendication 7, caractérisé en ce que chaque face plane de la portion centrale du flasque (41) se raccorde à la face plane correspondante de la portion périphérique par une surface conique dont la grande base est tournée vers l'autre surface conique.

10. Plateau selon l'une des revendications 1 à 9, caractérisé en ce que les couches de tissu du flasque stratifié (11, 41, 61) ont des orientations différentes.

11. Plateau selon l'une des revendications 1 à 10, caractérisé en ce que le tissu de fibres utilisé dans la réalisation du flasque stratifié (11, 41, 61) est un satin, dont les caractéristiques suivant la trame et la chaîne sont identiques.

12. Plateau selon l'une des revendications 1 à 11, caractérisé en ce que l'empilement comprend des couches croisées de tissu (19) dont la trame ou la chaîne du tissu est orientée à un certain angle sur la direction radiale, les couches croisées étant disposées à coeur de l'empilement (en 18 et 19).

13. Plateau selon la revendication 12 et dont l'épaisseur du flasque est variable, caractérisé en ce que certaines des couches croisées (19) sont arrêtées progressivement entre la portion centrale (6) et la portion périphérique du flasque (11), afin de donner la variation d'épaisseur souhaitée.

14. Plateau selon l'une des revendications 2 à 13, caractériaé en ce que la ceinture (23, 43, 73) àe stratifils est logé, au niveau des parties en saillie radiale vers l'extérieur, dans des alvéoles ménagés dans la tranche en bout de ces parties et ouverts vers l'extérieur.

15. Plateau selon l'une des revendications 1 à 14, caractérisé en ce que la ceinture (23, 43, 73) de stratifils est constituée d'un ruban de stratifils préimprégnés d'une résine synthétique, qui a été enrubanné autour du flasque (11, 41, 61) puis polymérisé.

16. Plateau selon l'une des revendications 1 à 14, caractérisé en ce que la ceinture (23, 43, 73) de stratifils est constituée d'un agglomérat de stratifils préimprégnés d'une résine synthétique, qui a été bobiné autour du flasque ppuis polymérisé.

17. Plateau selon l'une des revendications 2 à 16, caractérisé en ce que la portion centrale (6, 56) du flasque (11, 41, 61) présente une ouverture axiale (10, 60) destinée à être disposée sur l'ouverture de l'extrémité supérieure (49) du mât rotor (48), et entourée d'une couronne de trous de fixation du flasque (11, 41, 61) au mât rotor (48) et/ou à une entretoise (1, 51) séparant les flasques (11, 41, 61) de deux plateaux adjacents (2, 3, 52, 53).

18. Plateau selon l'une des revendications 1 à 7, caractérisé en ce que le flasque (11, 41, 61) est constitué en tissu de fibres à haute résistance de préférence en carbone.

19. Plateau selon l'une des revendications 1 à 18, caractérisé en ce que la ceinture (23, 43, 73) est constituée de stratifils de verre ou de préférence de carbone.

20. Procédé de fabrication d'un plateau selon l'une des revendications 1 à 19, consistant:
- à disposer dans un moule un empilement de couches de tissu de fibres à haute résistance mécanique, après imprégnation du tissu avec une résine synthétique et découpe de chaque couche à la forme requise,

- à effectuer une compression appropriée de l'empilement en fonction des caractéristiques et qualité souhaitées du plateau,

- à effectuer un premier cycle de polymérisation,

- à démouler, caractérisé en ce qu'il consiste en outre:

- à bobiner ou à enrubanner respectivement sur la tranche de l'empilement, des stratifils ou un ruban de stratifils de fibres à haute résistance mécanique préimprégnés d'une résine synthétique, jusqu'à réaliser une ceinture (23, 43, 73) de stratifils d'épaisseur requise, après mise en place éventuelle de blocs (24, 44) d'un matériau de remplissage entre des parties en saillie radiale vers l'extérieur de l'empilement,

- et à effectuer un second cycle de polymérisation.

21. Moyeu de rotor de giravion, caractérisé en ce qu'il comprend au moins un plateau (2, 3, 52, 53) selon l'une des revendications 1 à 19.

22. Moyeu de rotor de giravion comprenant un plateau inférieur (53) et un plateau supérieur (52) coaxiaux et séparés par une entretoise (51), caractérisé en ce que chacun des plateaux présente une forme d'assiette selon la revendication 5, dont la concavité est tournée vers l'autre plateau, chacun des plataaux étant fixé, par sa portion centrale (56), à l'entretoise (51) et, pour ce qui concerne le plateau inférieur (53), également à l'extrémité supérieure (49) d'un mât rotor (48).

23. Moyeu de rotor de giravion comprenant un plateau inférieur (3) et un plateau supérieur (2) coaxiaux séparés par une entretoise (1), caractérisé en ce que chacun des plateaux est un plateau selon la revendication 8 rattachée à la revendication 7 telle que rattachée à elle-même à la revendication 3.

24. Moyeu selon l'une des revendications 22 et 23, caractérisé en ce que les parties en saillie radiale vers l'extérieur et superposées des deux plateaux (2, 3, 52, 53) présentent chacune un unique alésage de raccordement à une pale (29, 79) correspondante, cet alésage étant équipé d'au moins une bague épaulée (14, 24) destinée à recevoir une broche (34, 34) de retenue d'un dispositif de liaison au pied de la pale (29, 79) correspondante.

**Patentansprüche**

1. Plateau, das insbesondere zur Aufnahme der Nabe eines Hubschrauberrotors sowie dazu bestimmt ist, mit dem oberen Teil eines Rotormastes (48), rechtwinklig zu einer Rotationsachse A desselben, formschlüssig verbunden zu werden, damit Rotorblätter (29, 79) am Rotormast (48) befestigt werden können, wobei das Plateau aus einem Kompositmaterial besteht und einen Schichtstoff-Flansch (11, 41, 61) aufweist, welcher durch einen Stapel von Gewebeschichten aus Fasern hoher mechanischer Festigkeit gebildet ist, dadurch gekennzeichnet, daß das Gerippe des Flansches (11) aus Gewebelängsschichten (15, 17) besteht, wobei der Schuß oder die Kette des Gewebes in einer radialen Richtung orientiert ist, die der Richtung der Zentrifugalkraft entspricht, die während des Betriebs auf das Plateau ausgeübt wird, und die Längsschichten im Kern des Stapels (bei 17) und zumindest im peripheren Bereich des Flansches (11) in der Oberfläche des Stapels (bei 15 und 16) angeordnet sind, und daß der Flansch (11, 41, 61) von einem Gürtel (23, 43, 73) aus Rovings aus Fasern hoher mechanischer Festigkeit umschlossen ist.

2. Plateau nach Anspruch 1, dadurch gekennzeichnet, daß der Flansch (11, 41, 61) einen zentralen Abschnitt (6, 56) mit ebenen Flächen und einen peripheren Abschnitt (63) mit ebenen Flächen aufweist, welcher radial nach außen vorspringende Teile (13) in der gleichen Anzahl aufweist, wie die Zahl der Blätter (29, 79), die durch das Plateau am Rotormast (48) befestigt werden sollen, wobei in jedes dieser nach außen vorspringenden Teile mindestens eine Bohrung zur Befestigung an einem entsprechenden Blatt eingeschnitten ist und wobei der Gürtel (23, 43, 73) aus Faserrovings stramm an der radialen Außenflüche jedes dieser radial nach außen vorspringenden Teile anliegt.

3. Plateau nach Anspruch 2, dadurch gekennzeichnet, daß der Flansch (11, 41) die Gestalt eines Sternes hat, wobei jeder Zacken (12, 42) des Sternes ein nach außen vorspringendes Teil darstellt, welches im zentralen Abschnitt (6) des Flansches (11, 41) breiter ist als an seinem radialen äußeren Ende (13), und wobei die Räume zwischen zwei benachbarten Zacken (12, 42), dem Gürtel (23, 43) aus Faserrovings und zwei Oberflächenlagen (21, 22), von denen jede aus mindestens einer Stapelschicht besteht, mit einem Füllmaterial (24, 44), wie z.B. einem Schaumstoff mit geschlossenen Zellen ausgefüllt sind.

4. Plateau nach Anspruch 2, dadurch gekennzeichnet, daß der Flansch (61) eine polygonale Gestalt mit leicht gerundeten oder radial nach außen gewölbten Seiten aufweist, und daß die abgerundeten Spitzen die radial nach außen vorspringenden Teile darstellen.

5. Plateau nach Anspruch 4, dadurch gekennzeichnet, daß der Flansch (61) die Gestalt eines Tellers aufweist, indem der zentrale kreisförmige Abschnitt (56) des Flansches (61) in den peripheren Abschnitt (63) über mindestens einen, im wesentlichen konischen Abschnitt übergeht.

6. Plateau nach einem der Ansprüche 1 bis 5, dadurch gekennzeichnet, daß die Dicke des Flansches (11) im wesentlichen konstant und größer ist als die Höhe des Gürtels (73) aus Faserrovings.

7. Plateau nach einem der Ansprüche 1 bis 5, dadurch gekennzeichnet, daß der Flansch (11, 41) eine variable Dicke aufweist, die im zentralen Abschnitt (6) am größten ist.

8. Plateau nach Anspruch 7, dadurch gekennzeichnet, daß eine ebene Fläche des zentralen Abschnitts (6) des Flansches (11) in die entsprechende ebene Fläche des peripheren Abschnitts über eine konische Oberfläche übergeht, während die andere Fläche des Flansches (11) eben ist.

9. Plateau nach Anspruch 7, dadurch gekennzeichnet, daß jede ebene Fläche des zentralen Abschnitts des Flansches (41) in die entsprechende ebene Fläche des peripheren Abschnitts über eine konische Oberfläche übergeht, deren große Grundfläche der anderen konischen Oberfläche zugewandt ist.

10. Plateau nach einem der Ansprüche 1 bis 9, dadurch gekennzeichnet, daß die Gewebeschichten des Schichtstoff-Flansches (11, 41, 61) unterschiedliche Orientierung haben.

11. Plateau nach einem der Ansprüche 1 bis 10, dadurch gekennzeichnet, daß das zur Herstellung des Schichtstoff-Flansches (11, 41, 61) verwendete Fasergewebe ein Satin ist, dessen Merkmale hinsichtlich Schuß und Kette identisch sind.

12. Plateau nach einem der Ansprüche 1 bis 11, dadurch gekennzeichnet, daß der Stapel überkreuz liegende Gewebeschichten (19) enthält, wobei der Schuß oder die Kette des Gewebes in einem bestimmten Winkel zur radialen Richtung orientiert ist und die überkreuz liegenden Schichten im Kern des Stapels (bei 18 und 19) angeordnet sind.

13. Plateau nach Anspruch 12, wobei die Dicke des Flansches variabel ist, dadurch gekennzeichnet, daß bestimmte überkreuz liegende Schichten (19) fortschreitend fixiert sind zwischen dem zentralen Abschnitt (6) und dem peripheren Abschnitt des Flansches (11), wodurch die gewünschte Variation in der Dicke erzielt wird.

14. Plateau nach einem der Ansprüche 2 bis 13, dadurch gekennzeichnet, daß der Gürtel (23, 43, 73) aus Faserrovings an de, Stelle der nach außen vorspringenden Teile in Zellen liegt, die in die am äußeren Ende dieser Teile liegende Fläche eingeschnitten sind und sich nach außen öffnen.

15. Plateau nach einem der Ansprüche 1 bis 14, dadurch gekennzeichnet, daß der Gürtel (23, 43, 73) aus einem Band aus Faserrovings besteht, welches mit einem synthetischen Harz vorimprägniert, um den Flansch geschlungen und danach polymerisiert worden ist.

16. Plateau nach einem der Ansprüche 1 bis 14, dadurch gekennzeichnet daß der Gürtel (23, 43, 73) aus einem Agglomerat von Faserrovings besteht, welches mit einem synthetischen Harz vorimprägniert, um den Flansch gewickelt und danach polymerisiert worden ist.

17. Plateau nach einem der Ansprüche 2 bis 16, dadurch gekennzeichnet, daß der zentrale Abschnitt (6, 56) des Flansches (11, 41, 61) eine axiale Öffnung (10, 60) aufweist, die dazu bestimmt ist, auf die Öffnung am oberen Ende (49) des Rotormastes (48) gelegt zu werden, und die von einem Kranz von Löchern zur Befestigung des Flansches (11, 41, 61) am Rotormast (48) und/oder an einer Querstrebe (1, 51), welche die Flansche (11, 41, 61) von zwei benachbarten Plateaus (2, 3, 52, 53) trennt, umschlossen ist.

18. Plateau nach einem der Ansprüche 1 bis 7, dadurch gekennzeichnet, daß der Flansch (11, 41, 61) aus einem Gewebe aus Fasern großer Festigkeit, vorzugsweise aus Kohlefasern besteht.

19. Plateau nach einem der Ansprüche 1 bis 18, dadurch gekennzeichnet, daß der Gürtel (23, 43, 73) aus Glasfaserrovings oder vorzugsweise aus Kohlefaserrovings besteht.

20. Verfahren zur Herstellung eines Plateaus gemäß einem der Ansprüche 1 bis 19, bei welchem
- in einer Form ein Stapel aus einem Gewebe aus Fasern hoher mechanischer Festigkeit angeordnet wird, worauf das Gewebe mit einem synthetischen Harz imprägniert und jede Schicht auf die gewünschte Gestalt zugeschnitten wird,
- der Stapel in geeigneter Weise und mit Blick auf die gewünschten Merkmale und Eigenschaften des Plateaus komprimiert wird,
- ein erster Polymerisationszyklus durchgeführt wird und
- entformt wird, dadurch gekennzeichnet, daß in zusätzlicher Verfahrenschritten:
- die zurechtgeschnittene Stapellage mit Faserrovings oder mit einem Band aus Rovings von Fasern hoher mechanischer Festigkeit, die mit einem synthetischen Harz vorimprägniert wurden, umwickelt oder umschlungen wird, um einen Gürtel (23, 43, 73) aus Faserrovings mit der erforderlichen Dicke zu erhalten, nachdem gegebenenfalls Blöcke (24, 44) eines Füllmaterials zwischen die nach außen vorspringenden Teile des Stapels plaziert worden sind, und
- ein zweiter Polymerisationszyklus durchgeführt wird.

21. Nabe eines Hubschrauberrotors, dadurch gekennzeichnet, daß sie mindestens ein Plateau (2, 3, 52, 53) gemäß einem der Ansprüche 1 bis 19 aufweist.

22. Nabe eines Hubschrauberrotors, enthaltend ein unteres (53) und ein oberes (52) Plateau, die koaxial und durch eine Querstrebe (51) voneinander getrennt sind, dadurch gekennzeichnet, daß jedes Plateau die Gestalt eines Tellers gemüß Anspruch 5 hat, dessen Hohlfläche dem anderen Plateau zugewandt ist, wobei jedes Plateau mit seinem zentralen Abschnitt (56) an der Querstrebe (51) und, soweit es das untere Plateau (53) betrifft, auch am oberen Ende (49) eines Rotormastes (48) befestigt ist.

23. Nabe eines Hubschrauberrotors, enthaltend ein unteres (3) und ein oberes (2) Plateau, koaxial und durch eine Querstrebe (1) voneinander getrennt, dadurch gekennzeichnet, daß jedes Plateau ein Plateau gemäß Anspruch 8 ist, soweit dieser von Anspruch 7 und der letztere wiederum von Anspruch 3 abhängig ist.

24. Nabe nach einem der Ansprüche 22 und 23, dadurch gekennzeichnet, daß von den nach außen vorspringenden und übereinander liegenden Teilen der beiden Plateaus (2, 3, 52, 53) jedes eine einzige Bohrung zur Befestigung an einem entsprechenden Blatt (29, 79) aufweist, wobei diese Bohrung mit mindestens einem Schulterring (14, 24) ausgerüstet ist, der dazu bestimmt ist, eine Rückhaltespindel (34, 84) für ein Verbindungselement am Fuße des entsprechenden Blattes (29, 79) aufzunehmen.

## Claims

1. Plate more particularly designed to equip a rotor craft hub and to be fixed to the upper portion of a rotor mast (48), perpendicularly to an axis of rotation A of this latter, with the object of connecting the rotor blades (29, 79) to the rotor mast (48), the plate being constructed of composite material and comprising a layered cheek (11, 41, 61) formed by a stack of layers of cloth of fibres of high mechanical strength, characterised in that the framework of the cheek (11) is constituted by longitudinal layers of cloth (15, 17) the warp or weft of the cloth of which is orientated in the radial direction, which corresponds to the direction of the centrifugal force which is exerted on the plate in service, the longitudinal layers being disposed in the heart of the stack (at 17) and, at least in the peripheral portion of the cheek (11), on the surfaces of the stack (at 15 and 16) and that the cheek (11, 41, 61) is surrounded by a ring (23, 43, 73) of rovings of high mechanical strength fibres.

2. Plate according to claim 1, characterised in that the cheek (11, 41, 61) as a central portion (6, 56) with flat faces and a peripheral portion (63) with flat faces comprising portions (13) projecting radially towards the outside at a number equal to the number of blades (29, 79) which the plate is designed to join to the rotor mast (48), each of the said parts projecting radially towards the exterior being pierced by at least one bore for attaching a corresponding blade, the ring (23, 43, 73) of rovings being tensioned against the exterior radial section of each of the parts projecting radially towards the outside.

3. Plate according to claim 2, characterised in that the cheek (11, 41) has the form of a star, each branch (12, 42) of the star constituting a portion radially projecting towards the outside wider at the side of the central portion (6) of the cheek (11, 41) than at its radially outward end (13), the volume defined between two adjacent branches (12, 42), the ring (23, 43) of rovings and two surface reinforcements (21, 22), each of which is constituted by at least one layer of the stack, being occupied by a filler material (22, 44) such as a closed cell foam.

4. Plate according to claim 2, characterised in that the cheek (61) has a polygonal shape with sides slightly rounded or arched radially towards the outside, and of which the rounded vertices constitute the portions radially extending towards the outside.

5. Plate according to claim 4, characterised in that the cheek (61) has a shape of a dish such that the central circular portion (56) of the cheek (61) is connected to the peripheral portion (63) by at least one essentially conical portion.

6. Plate according to one of claims 1 to 5, characterised in that the thickness of the cheek (11) is substantially constant and greater than the height of the ring (73) of rovings.

7. Plate according to one of claims 1 to 5, characterised in that the cheek (11, 41) has a variable thickness which is maximum in the central portion (6).

8. Plate according to claim 7, characterised in that one flat face of the central portion (6) of the cheek (11) is connected to the corresponding flat face of the peripheral portion via a conical surface while the other face of the side cheek (11) is flat.

9. Plate according to claim 7, characterised in that each flat face of the central portion of the cheek (41) is connected to the corresponding flat face of the peripheral portion via a conical surface the large base of which is directed towards the other conical surface.

10. Plate according to one of claims 1 to 9, characterised in that the layers of cloth in the layered cheek (11, 41, 61) have different orientations.

11. Plate according to one of claims 1 to 10, characterised in that the fibrous cloth used in the manufacture of the layered cheek (11, 41, 61) is a satin the characteristics of which in warp and weft directions are identical.

12. Plate according to one of claims 1 to 11, characterised in that the stack comprises crossed layers of fabric (19) the warp or weft of the cloth of which is orientated at a certain angle relative to the radial direction, the crossed layers being located at the heart of the stack (at 15, 19).

13. Plate according to claim 12 and the thickness of the cheek of which is variable characterised in that certain of the crossed layers (19) are truncated progressively between the central portion (6) and the peripheral portion of the cheek (11) with the object of giving the desired variation in thickness.

14. Plate according to one of claims 2 to 13, characterised in that the ring (23, 43, 73) of rovings is located, at the level of the portions radially outwardly directed, in a seating provided in the section at the foot of these portions and open towards the outside.

15. Plate according to one of claims 1 to 14, characterised in that the ring (23, 43, 73) of rovings is formed by a ribbon of rovings pre-impregnated with a synthetic resin which has been wrapped around the cheek (11, 41, 61) and then polymerised.

16. Plate according to one of claims 1 to 14, characterised in that the ring (23, 43, 73) of rovings is formed by an agglomerate of rovings preimpregnated with a synthetic resin which has been wound around the cheek and then polymerised.

17. Plate according to one of claims 2 to 16, characterised in that the central portion (6, 56) of the cheek (11, 41, 61) has an axial opening (10, 60) designed to be located on the opening of the upper end (49) of the rotor mast (45) and is surrounded by a ring of fixing holes for the cheek (11, 41, 61) to the rotor mast (48) and/or to a distance piece (1, 51) separating the cheeks (11, 41, 61) of two adjacent plates (2, 3, 52, 53).

18. Plate according to one of claims 1 to 7, characterised in that the cheek (11, 41, 61) is formed of fabric of high strengh fibres preferably carbon fibres.

19. Plate according to one of claims 1 to 18, characterised in that the ring (23, 43, 73) is formed of glass fibre rovings or preferably carbon fibre rovings.

20. Process for the manufacture of a plate according to one of claims 1 to 19, consisting of:
-locating in a mould a stack of layers of cloth of high mechanical strength fibre after impregnation of the cloth with a synthetic resin and cutting each layer to the shape required,
-exercising appropriate compression on the stack dependent on the quality and characteristics desired for the plate,
-carrying out a first polymerisation cycle,
-demoulding,
and characterised in that it consists in addition of:
-winding or wrapping respectively on the section of the stack rovings or a ribbon of rovings of high mechanical strength which have been pre-impregnated with a synthetic resin until the formation of a ring (23, 43, 73) of rovings of the desired thickness, optionally after having located in place blocks (24, 44) of a filler material between the portions of the stack projecting radially towards the exterior and
-carrying out a second prelimerisation cycle.

21. Rotor craft hub characterised in that it comprises at least one plate (2, 3, 52, 53) according to one of claims 1 to 19.

22. Rotor craft hub comprising a lower plate (53) and an upper plate (52) which are coaxial and separated by a distance piece (51) characterised in that each of the plates has the shape of a dish according to claim 5, the cavity of which is directed towards the other plate, each of the plates being fixed by a central portion (56) to the distance piece (51) and, as far as the lower plate (53) is concerned likewise to the upper end (49) of a rotor mast (48).

23. Rotor craft hub comprising a lower plate (3) and an upper plate (2) which are coaxial and separated by a distance piece (1) characterised in that each of the plates is a plate according to claim 8 when dependent on claim 7 while itself dependent on claim 3.

24. Hub according to one of claims 22 and 23 characterised in that the portions which are superposed and projecting radially towards the outside of the two plates (2, 3, 52, 53) each have a single fixing bore for a corresponding blade (29, 79), this bore being provided with at least one flanged ring (14, 24) designed to receive a holding pin (34, 54) of a connector device at the foot of the corresponding blade (29, 79).

_Fig.1_

0 099 294

_Fig.6_

_Fig.5_

_Fig.3_

_Fig.2_

_Fig.4_

_Fig.7_

_Fig.8_

5

_Fig. 9_

_Fig. 11_

_Fig. 10_

0 099 294